# EUROPÄISCHE PATENTSCHRIFT

(11) **EP 2 991 900 B1**
(45) Veröffentlichungstag und Bekanntmachung des Hinweises auf die Patenterteilung: **29.03.2017**
(21) Anmeldenummer: 14718366.9
(22) Anmeldetag: 11.04.2014
(51) Int. Cl.: B64F 1/36, G07B 15/00

(54) **GEPÄCKABFERTIGUNGSSYSTEM FÜR EINEN FLUGHAFEN**
BAGGAGE HANDLING SYSTEM FOR AN AIRPORT
SYSTÈME D'ENREGISTREMENT DES BAGAGES POUR AÉROPORT

(30) Priorität: 29.04.2013 DE 102013207810
(43) Veröffentlichungstag der Anmeldung: 09.03.2016
(73) Patentinhaber: Siemens Aktiengesellschaft, 80333 München (DE)
(72) Erfinder: ZIEGLER, Roland, 90768 Fürth (DE)
(74) Vertreter: Maier, Daniel Oliver
(86) Internationale Anmeldenummer: PCT/EP2014/057351
(87) Internationale Veröffentlichungsnummer: WO 2014/177361

(56) Entgegenhaltungen:
- DE-A1- 10 339 951
- DE-A1-102007 017 294

## Beschreibung

Die Erfindung bezieht sich auf ein Gepäckabfertigungssystem für einen Flughafen nach dem Oberbegriff des Patentanspruches 1.

Ein solches Flughafen-Gepäckabfertigungssystem weist eine Sortierförderanlage zum Transport von Gepäckstücken zu Sortierzielen auf Förderrouten auf. Die Förderrouten werden durch an sich bekannte Förderelemente gebildet und weisen an Verzweigungsstellen einstellbare Weichen auf, an welchen die Gepäckstücke in unterschiedliche Förderrichtungen weitertransportiert werden. Die Sortierförderanlage weist ein übergeordnetes Steuerungssystem sowie den Weichen zugeordnete Steuereinheiten auf. Das Steuerungssystem ist dazu ausgebildet, eine Avisenliste von übertragenen Gepäckstückavisen und einen Sortierplan mit Identifikationsdaten-Sortierziel-Zuordnungen bereitzustellen und für die Weichen Routentabellen mit Sortierziel-Förderrichtungs-Zuordnungen vorzugeben. Jede der Steuereinheiten ist dazu ausgebildet, das Sortierziel eines Gepäckstückes anhand eines vor Erreichen der Weiche erfassten Identifikationsdatums des Gepäckstückes vom Steuerungssystem abzufragen und anhand der vorgegebenen Routentabelle die dem Sortierziel zugeordnete Förderrichtung einzustellen. Eine derartige Flughafen-Gepäckförderanlage und eine Steuerung für eine solche ist aus der gattungsgemäßen Offenlegungsschrift DE 103 39 951 A1 bekannt.

Das Flughafen-Gepäckabfertigungssystem weist ferner ein Abflugabfertigungssystem zur Anmeldung eines Gepäckstückes für einen Flug auf, was international beispielsweise unter der Bezeichnung "Common Use Terminal Equipment" bekannt ist. An durch Flughafenpersonal bedienbaren Abflugschaltern, international als "Check-in Counter" bezeichnet, oder an durch Fluggäste bedienbaren Abflugautomaten, international als "Self Service Check-in" bezeichnet, werden dem Gepäckstück zugeordnete Gepäckstückattribute, aufweisend
- einen Fluggesellschaftscode, international "Carrier Code",
- eine Flugnummer, international "Flight Number",
- eine Reiseklasse, international "Cabin Class",
- einen Reiseverlauf, international "Itinerary",
sowie andere für die Sortierung relevante Attribute, aufgenommen und ein dem Gepäckstück zugeordnetes Identifikationsdatum vergeben. Das Identifikationsdatum wird auf ein mit dem Gepäckstück zu verbindendes Trägerelement, international als "Baggage Tag" bezeichnet, übertragen. Beispielsweise wird ein als Strichcode ausgebildetes Identifikationsdatum auf ein als Klebebanderole ausgebildetes Trägerelement gedruckt, die dann um einen Griff eines Gepäckstückes geklebt werden kann. Diese international standardisierten Prozesse sind in dem "Passenger Services Conference Resolution Manual", herausgegeben von der International Air Transport Association, kurz IATA, beschrieben.

Das Flughafen-Gepäckabfertigungssystem weist ferner ein Gepäckavisierungssystem, international als "Baggage Message System" bezeichnet, auf, welches dazu ausgebildet ist, die im Abflugabfertigungssystem eingegebenen Gepäckstückattribute und die vergebenen Identifikationsdaten zu übernehmen und für ein zu transportierendes Gepäckstück aus dem zugeordneten Identifikationsdatum und den zugeordneten Gepäckstückattributen einen Gepäckstückavis, international mit "Baggage Source Message" bezeichnet. Der Gepäckstückavis wird an das Steuerungssystem der Sortierförderanlage übertragen, um einen durchzuführenden Transport des Gepäckstückes anzukündigen. Das Gepäckavisierungssystem kann beispielsweise durch ein Flugabfertigungssystem einer Fluggesellschaft gebildet sein, was international als "Airline Departure Control System" bezeichnet wird. Es kann aber auch ein gesondertes Gepäckmitteilungssystem, international mit "Baggage Message System" bezeichnet, zum Einsatz kommen, welches von den Flugabfertigungssystemen der verschiedenen Fluggesellschaften Gepäckstückavise für abzufertigende Flüge erhält und an das Steuerungssystem der Sortierförderanlage sendet.

Der Erfindung liegt nun die Aufgabe zugrunde, ein Flughafen-Gepäckabfertigungssystem der eingangs genannten Art bereitzustellen, das auch bei teilweisen Systemausfällen noch einen Transport von Gepäckstücken zu ihren Sortierzielen ermöglicht.

Die Aufgabe wird erfindungsgemäß gelöst durch ein gattungsgemäßes Flughafen-Gepäckabfertigungssystem mit den im kennzeichnenden Teil des Patentanspruches 1 angegebenen Merkmalen. Demnach weist das Gepäckabfertigungssystem ein Hilfsabfertigungssystem auf, das dazu ausgebildet ist, die bei Anmeldung eines Gepäckstückes eingegebenen Gepäckstückattribute und das vergebene Identifikationsdatum vom Abflugabfertigungssystem zu übernehmen, daraus den Gepäckstückavis zu bilden und an das Steuerungssystem zu übertragen sowie den durch das Steuerungssystem bereitgestellten Sortierplan nachzubilden. Außerdem ist jede der Steuereinheiten dazu ausgebildet, anhand des stromauf der Weiche erfassten Identifikationsdatums eines Gepäckstückes dessen Sortierziel hilfsweise vom Hilfsabfertigungssystem abzufragen. Hierdurch kann auch bei außer Betrieb befindlichem Gepäckavisierungssystem die Sortierförderanlage weiterbetrieben werden, da dem Steuerungssystem die Gepäckstückavise hilfsweise über das Hilfsabfertigungssystem zugeführt werden. Bei in Betrieb befindlichem Abflugabfertigungssystem kann die Sortierförderanlage weiterbetrieben werden, selbst wenn deren übergeordnetes Steuerungssystem ausfallen würde, da anhand des im Hilfsabfertigungssystem nachgebildeten Sortierplans und der zugeführten Gepäckstückavisen jede Steuerungseinheit für an identifiziertes Gepäckstück das Sortierziel vom Hilfsabfertigungssystem abfragen und anhand der vorgegebenen Routentabelle die Förderrichtung der Weiche zum Sortierziel einstellen kann.

In einer bevorzugten Ausgestaltung des erfindungsgemäßen Flughafen-Gepäckabfertigungssystems ist das Hilfsabfertigungssystem dazu ausgebildet, hilfsweise die einem Gepäckstück zugeordneten Gepäckstückattribute aufzunehmen, ein dem Gepäckstück zugeordnetes Hilfsidentifikationsdatum zu vergeben und dieses auf ein mit dem Gepäckstück zu verbindendes Hilfsträgerelement zu übertragen, aus dem Hilfsidentifikationsdatum und den Gepäckstückattributen einen Hilfsgepäckstückavis zu bilden und diesen an das Steuerungssystem zu übertragen, wobei das Steuerungssystem dazu ausgebildet ist, die übertragenen Hilfsgepäckstückavise zur Abarbeitung in die Avisenliste aufzunehmen und im Sortierplan Hilfsidentifikationsdaten-Sortierziel-Zuordnungen bereitzustellen. Hierdurch kann die Sortierförderanlage auch bei ausgefallenem Abflugabfertigungssystem über das Hilfsabfertigungssystem weiterbetrieben werden, indem dort eine hilfsweise Aufnahme der Gepäckstückattribute, beispielsweise durch manuelle Eingabe, und eine hilfsweise Vergabe eines Hilfsidentifikationsdatums sowie dessen Übertragung auf ein Hilfsträgerelement ermöglicht wird. Die Verwendung von Hilfsträgerelementen erlaubt auch eine vollständige Nutzung der Gepäcknachverfolgungsfunktion des Steuerungssystems.

Vorzugsweise sind das Hilfsabfertigungssystem und das Abflugabfertigungssystem des erfindungsgemäßen Flughafen-Gepäckabfertigungssystems über eine gemeinsame Bedienoberfläche an einer Gepäckabfertigungsstelle des Flughafens bedienbar. Eine Gepäckabfertigungsstelle kann ein durch Flughafenpersonal bedienbarer Abflugschalter oder ein durch den Fluggast bedienbarer Abflugautomat sein. Die Bedienoberfläche kann durch einen Berührungsbildschirm mit Drucktastenfunktion und Skalierungsfunktion gebildet sein, der eine Bedienung sowohl des Abflugabfertigungssystems als auch des Hilfsabfertigungssystems erlaubt.

In einer vorteilhaften Ausgestaltung des erfindungsgemäßen Flughafen-Gepäckabfertigungssystems ist das Hilfsabfertigungssystem derart in eine bestehende Gepäckabfertigungsstelle mit Abflugabfertigungssystem und Bedienschnittstelle integrierbar, dass Rechner- und Speichereinrichtungen mit Datenverarbeitungsprogrammen des Hilfsabfertigungssystems fernab der Gepäckabfertigungsstelle angeordnet bzw. ausführbar und über ein Datennetzwerk oder über eine Cloud-Computing-Dienstleistung von der Bedienschnittstelle der Gepäckabfertigungsstelle aus bedienbar sind. Hierdurch ist es möglich, das Hilfsabfertigungssystem in an einem Flughafen bereits bestehende Gepäckabfertigungsstellen, insbesondere in bestehende Abflugschalter, zu integrieren, ohne diese umbauen zu müssen.

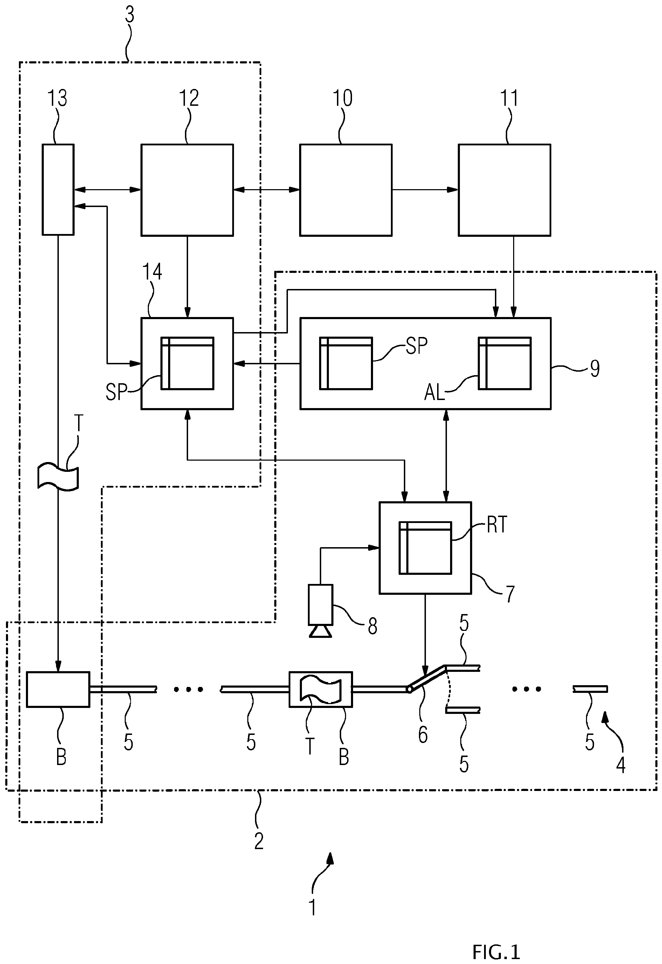

Weitere Eigenschaften und Vorteile des erfindungsgemäßen Flughafen-Gepäckabfertigungssystems ergeben sich aus einem nachfolgend näher beschriebenen Ausführungsbeispiel anhand der Zeichnung, in deren einziger Figur das Gepäckabfertigungssystem mit verschiedenen Ausfallszenarien schematisch veranschaulicht ist.

Gemäß der einzigen Figur umfasst ein Gepäckabfertigungssystem 1 für einen Flughafen eine Sortierförderanlage 2. Mittels der Sortierförderanlage 2 ist ein Gepäckstück B von einer Gepäckabgabestelle, beispielsweise an einem Abflugschalter 3, auf einer von einer Vielzahl an Förderrouten zu seinem Sortierziel an einer Sortierendstelle 4 transportierbar. Die Förderouten werden durch Förderelemente 5, wie zum Beispiel Förderbänder mit Transportschalen und dergleichen, gebildet und weisen an Verzweigungsstellen stellbare Weichen 6 für unterschiedliche Förderrichtungen auf, in die ein Gepäckstück B auf seiner Förderroute von der Weiche 6 wegtransportierbar ist. Hierzu ist jeder Weiche 6 eine Steuereinheit 7 zugeordnet, welche die für ein zur Weiche 6 hin transportiertes Gepäckstück B einzustellende Förderrichtung anhand eines diesem Gepäckstück B zugeordnetem Identifikationsdatums bestimmt. Das Identifikationsdatum kann als Strichcode ausgebildet sein und ist dem Gepäckstück B durch ein an diesem befestigtes, als Klebebanderole ausgebildetes Trägerelement T zugeordnet. Stromab der Weiche 6 ist ein Lesegerät 8 angeordnet, welches das Identifikationsdatum vom Trägerelement T ausliest und an die Steuereinheit 7 übergibt. Die den Weichen 6 zugeordneten Steuereinheiten 7 sind mit einem übergeordneten Steuerungssystem 9 der Sortierförderanlage 2 gekoppelt, welches den Steuereinheiten 7 je Verzweigungsstelle zur Umsetzung der Förderrouten eine Zuordnung von Förderrichtungen zu Sortierzielen in Form einer Routentabelle RT bereitstellt. Die Steuereinheit 7 startet nach Empfang eines Identifikationsdatums eine Abfrage nach einem dem Identifikationsdatum zugeordneten Sortierziel. Hierfür stellt das Steuerungssystem 9 einen Sortierplan SP bereit, der gerade diese Zuordnung von Sortierzielen zu Identifikationsdaten von Gepäckstücken B enthält. Mit dem vom Steuerungssystem 9 zurückgemeldeten Sortierziel des Gepäckstückes B kann die Steuereinheit 7 aus der Routentabelle RT die Förderrichtung bestimmen, welche dann durch ein Stellglied der Weiche 6 eingestellt wird. Neben dem Sortierplan SP wird in dem übergeordneten Steuerungssystem 9 eine Avisenliste AL geführt, in der alle auszuführenden Transportaufträge der Sortierförderanlage 2 aufgelistet sind.

Die Transportaufträge werden dem Steuerungssystem 9 als Gepäckstückavise entweder direkt von einem Flugabfertigungssystem 10 einer Fluggesellschaft oder indirekt über ein gesondertes Gepäckavisierungssystem 11 zugeführt. Ein Gepäckstückavis eines zu transportierenden Gepäckstückes B wird aus dem Identifikationsdatum sowie aus weiteren, dem Gepäckstück B zugeordneten Gepäckstückattributen, wie zum Beispiel einem Fluggesellschaftscode, einer Flugnummer, einer Reiseklasse und einem Reiseverlauf, gebildet.

Das Gepäckabfertigungssystem 1 umfasst am Abflugschalter 3 ein Abflugabfertigungssystem 12 mit einer Benutzerschnittstelle 13 für Flughafenpersonal. Die Benutzerschnittstelle 13 weist Eingabemittel zur Eingabe der Gepäckstückattribute eines angemeldeten Gepäckstückes B auf. Das Abflugabfertigungssystem 12 ist dazu ausgebildet, für das angemeldete Gepäckstück B ein Identifikationsdatum zu vergeben und auf ein Trägerelement T zu übertragen. Hierzu weist die Benutzerschnittstelle 13 eine Druckeinrichtung auf, mittels der das als Strickcode ausgebildete Identifikationsdatum auf eine Klebebanderole aufgedruckt wird, welche dann am Gepäckstück B befestigt wird, bevor dieses von der Gepäckabgabestelle der Sortierförderanlage 2 abtransportiert wird.

Erfindungsgemäß weist das Flughafen-Gepäckabfertigungssystem 1 ein Hilfsabfertigungssystem 14 auf, dem vom Abflugabfertigungssystem 12 die aufgenommenen Gepäckstückattribute sowie die vergebenen Identifikationsdaten angemeldeter Gepäckstücke B parallel zum Gepäckavisierungssystem 11 zugesandt werden. Im Falle, dass sich das Gepäckavisierungssystem 11 außer Betrieb befindet, ist das Hilfsabfertigungssystem 14 dazu ausgebildet, die Gepäckstückavise selbst zu bilden und an das Steuerungssystem 9 zu übertragen. Damit kann die Sortierförderanlage 2 auch bei ausgefallenem Gepäckavisierungssystem 11 weiterbetrieben werden.

Ferner ist das Hilfsabfertigungssystem 11 dazu ausgebildet, den im Steuerungssystem 9 bereitgestellten Sortierplan SP nachzubilden, so dass bei außer Betrieb befindlichem Steuerungssystem 9 die Sortierförderanlage 2 modifiziert weiterbetrieben werden kann. Reagiert das Steuerungssystem 9 wegen Ausfall nicht auf eine Sortierzielanforderung einer Steuereinheit 7, so ist diese dazu ausgebildet, das dem erfassten Identifikationsdatum zugeordnete Sortierziel hilfsweise vom Hilfsabfertigungssystem 14 abzufragen. Dieses wird dem dort nachgebildeten Sortierplan SP entnommen und an die Steuereinheit 7 übermittelt, worauf letztere die einzustellende Förderrichtung der Routentabelle RT entnehmen kann.

Für den Fall, dass das Abflugabfertigungssystem 12 außer Betrieb geht, ist das Hilfsabfertigungssystem 14 dazu ausgebildet, hilfsweise die Gepäckstückattribute eines angemeldeten Gepäckstückes B aufzunehmen. Ferner kann mittels des Hilfsabfertigungssystems 14 für Gepäckstücke B ein Hilfsidentifikationsdatum vergeben und auf ein Hilfsträgerelement übertragen werden. Hierzu ist das Hilfsabfertigungssystem 14 durch die Benutzerschnittstelle 13 bedienbar, die neben der Druckeinrichtung beispielsweise als Berührungsbildschirm ausgebildete Ein-/Ausgabemittel aufweist. Der Berührungsbildschirm ist zweckmäßigerweise mit Druckknopffunktionen und Skalierungsfunktionen zur gleichzeitigen Bedienung des Hilfsabfertigungssystems 14 und des Abflugabfertigungssystems 12 eingerichtet. Das Hilfsabfertigungssystem 14 ist ferner dazu eingerichtet, aus Gepäckstückattributen und Hilfsidentifikationsdaten Hilfsgepäckstückavise zu bilden und an das Steuerungssystem 9 der Sortierförderanlage 2 zu übertragen. Die übertragenen Hilfsgepäckstückavise werden vom Steuerungssystem 9 in die Avisenliste aufgenommen. Das Steuerungssystem 9 stellt im Sortierplan entsprechend Sortierziel-Hilfsidentifikationsdaten-Zuordnungen für die Sortierzielanforderungen der Steuereinheiten 7 bereit.

Das Hilfsabfertigungssystem 14 ist im dargestellten Ausführungsbeispiel dem Abflugschalter 3 als Gepäckabfertigungsstelle des Flughafens zugeordnet. Nicht dargestellte Rechner- und Speichereinrichtungen mit ausführbaren Datenverarbeitungsprogrammen des Hilfsabfertigungssystems 14 können aber auch fernab der Gepäckabfertigungsstelle angeordnet bzw. ausführbar sein und über ein Datennetzwerk oder über eine Cloud-Computing-Dienstleistung von der Benutzerschnittstelle 13 aus bedienbar sind. Dies ist besonders vorteilhaft, wenn das erfindungsgemäße Hilfsabfertigungssystem 14 in an einem Flughafen bereits bestehende Gepäckabfertigungsstellen, insbesondere in bestehende Abflugschalter 3, integriert werden soll. Das erfindungsgemäße Hilfsabfertigungssystem 14 ist gleichermaßen für automatische Gepäckabfertigungsstellen anwendbar.

Insgesamt werden mittels des erfindungsgemäßen Hilfsabfertigungssystems 14 betriebliche Einschränkungen der Sortierförderanlage 2 bei Störungen der beteiligten Computersysteme 9, 10, 11 oder 12 weitestgehend vermieden, indem bei der Abflugabfertigung vorhandene Gepäckinformationen abgegriffen und durch das Hilfsabfertigungssystem 14 bereitgehalten werden.

## Patentansprüche

1. Gepäckabfertigungssystem (1) für einen Flughafen, umfassend
- eine Sortierförderanlage (2) zum Transport von Gepäckstücken (B) zu Sortierzielen auf Förderrouten mit in unterschiedliche Förderrichtungen einstellbaren Weichen (6), welche ein übergeordnetes Steuerungssystem (9) und den Weichen (6) zugeordnete Steuereinheiten (7) aufweist,
- ein Abflugabfertigungssystem (12) zur Anmeldung eines Gepäckstückes (B) für einen Flug, das dazu ausgebildet ist, dem Gepäckstück (B) zugeordnete Gepäckstückattribute, aufweisend einen Fluggesellschaftscode, eine Flugnummer, eine Reiseklasse und einen Reiseverlauf, aufzunehmen und ein dem Gepäckstück (B) zugeordnetes Identifikationsdatum zu vergeben und auf ein mit dem Gepäckstück (B) zu verbindendes Trägerelement (T) zu übertragen,
- ein Gepäckavisierungssystem (11), das dazu ausgebildet ist, für ein zu transportierendes Gepäckstück (B) einen Gepäckstückavis aus dem zugeordneten Identifikationsdatum und den zugeordneten Gepäckstückattributen zu bilden und an das Steuerungssystem (9) zu übertragen,
- wobei das Steuerungssystem (9) dazu ausgebildet ist, eine Avisenliste (AL) von übertragenen Gepäckstückavisen und einen Sortierplan (SP) mit Identifikationsdaten-Sortierziel-Zuordnungen bereitzustellen und für die Weichen (6) Routentabellen (RT) mit Sortierziel-Förderrichtungs-Zuordnungen vorzugeben,
- und wobei jede der Steuereinheiten (7) dazu ausgebildet ist, anhand eines stromauf der Weiche (6) erfassten Identifikationsdatums eines Gepäckstückes (B) dessen Sortierziel vom Steuerungssystem (9) abzufragen und anhand der vorgegebenen Routentabelle (RT) die dem Sortierziel zugeordnete Förderrichtung einzustellen,
**gekennzeichnet**
- **durch** ein Hilfsabfertigungssystem (14), das dazu ausgebildet ist, die bei Anmeldung eines Gepäckstückes (B) eingegebenen Gepäckstückattribute und das vergebene Identifikationsdatum vom Abflugabfertigungssystem (12) zu übernehmen und daraus den Gepäckstückavis zu bilden und an das Steuerungssystem (9) zu übertragen sowie den durch das Steuerungssystem (9) bereitgestellten Sortierplan (SP) nachzubilden,
- und **dadurch**, dass jede der Steuereinheiten (7) dazu ausgebildet ist, anhand des stromauf der Weiche (6) erfassten Identifikationsdatums eines Gepäckstückes (B) dessen Sortierziel hilfsweise vom Hilfsabfertigungssystem (14) abzufragen.

2. Gepäckabfertigungssystem (1) nach Anspruch 1,
- wobei das Hilfsabfertigungssystem (14) dazu ausgebildet ist, hilfsweise die einem Gepäckstück (B) zugeordneten Gepäckstückattribute aufzunehmen, ein dem Gepäckstück (B) zugeordnetes Hilfsidentifikationsdatum zu vergeben und dieses auf ein mit dem Gepäckstück (B) zu verbindendes Hilfsträgerelement (T) zu übertragen, aus dem Hilfsidentifikationsdatum und den Gepäckstückattributen einen Hilfsgepäckstückavis zu bilden und diesen an das Steuerungssystem (9) zu übertragen, und
- wobei das Steuerungssystem (9) dazu ausgebildet ist, die übertragenen Hilfsgepäckstückavise zur Abarbeitung in die Avisenliste (AL) aufzunehmen und im Sortierplan (SP) Hilfsidentifikationsdaten-Sortierziel-Zuordnungen bereitzustellen.

3. Gepäckabfertigungssystem (1) nach einem der Ansprüche 1 bis 2, wobei das Hilfsabfertigungssystem (14) und das Abflugabfertigungssystem (12) über eine gemeinsame Benutzerschnittstelle (13) an einer Gepäckabfertigungsstelle (3) des Flughafens bedienbar sind.

4. Gepäckabfertigungssystem (1) nach einem der Ansprüche 1 bis 2, wobei das Hilfsabfertigungssystem (14) derart in eine bestehende Gepäckabfertigungsstelle (3) mit Abflugabfertigungssystem (12) und Benutzerschnittstelle (13) integrierbar ist, dass Rechner- und Speichereinrichtungen mit Datenverarbeitungsprogrammen des Hilfsabfertigungssystems (14) fernab der Gepäckabfertigungsstelle (3) angeordnet bzw. ausführbar und über ein Datennetzwerk oder über eine Cloud-Computing-Dienstleistung von der Benutzerschnittstelle (13) der Gepäckabfertigungsstelle (3) aus bedienbar sind.

## Claims

1. Baggage handling system (1) for an airport, comprising
- a sorting conveyor system (2) for transporting baggage pieces (B) to sorting targets on conveyor routes with switch points (6) able to be set in different conveying directions, which has a superordinate control system (9) and control units (7) assigned to the switch points (6),
- a departure processing system (12) for checking in a baggage piece (B) for a flight, which is embodied to accept baggage piece attributes assigned to the baggage piece (B), comprising an airline code, a flight number, a travel class and an itinerary and to issue an item of identification data assigned to the baggage piece (B) and transfer it to a tag element (T) to be linked to the baggage piece (B),
- a baggage notification system (11), which is embodied, for a baggage piece (B) to be transported, to form a baggage piece notification from the assigned item of identification data and the assigned baggage piece attributes and transmit it to the control system (9),
- wherein the control system (9) is embodied to provide a notification list (AL) of transmitted baggage piece notifications and a sorting plan (SP) with identification data-sorting target assignments and to predetermine route tables (RT) with sorting target-conveying direction assignments for the switch points (6),
- and wherein each of the control units (7) is embodied, on the basis of an item of identification data of a baggage piece (B) detected upstream of the switch (6), to request its sorting target from the control system (9) and, on the basis of the predetermined routing table (RT), to set the conveyor direction assigned to the sorting target,
**characterised**
- **by** an auxiliary handling system (14) which is embodied to accept the baggage piece attributes entered and the item of identification data issued by the departure processing system (12) during notification of a baggage piece (B) and to form the baggage piece message from them and transfer it to the control system (9) and to emulate the sorting plan (SP) provided by the control system (9),
- and in that each of the control units (7) is embodied, on the basis of the item of identification data of a baggage piece (B) recorded upstream of the switch point (6), to request its sorting target as an alternative from the auxiliary handling system (14).

2. Baggage handling system (1) according to claim 1,
- wherein the auxiliary handling system (14) is embodied to accept the baggage piece attributes assigned to a baggage piece (B), to issue an auxiliary item of identification data assigned to the baggage piece (B) and to transmit this to an auxiliary tag (T) to be linked to the baggage piece (B), to form an auxiliary baggage message from the auxiliary item of identification data and the baggage piece attributes and to transmit these to the control system (9), and
- wherein the control system (9) is embodied to accept the transmitted auxiliary baggage piece messages for processing in the notification list (AL) and to provide auxiliary identification data-sorting target assignments in the sorting plan (SP).

3. Baggage handling system (1) according to one of claims 1 to 2, wherein the auxiliary handling system (14) and the departure processing system (12) are able to be operated via a common user interface (13) at a baggage handling position (3) of the airport.

4. Baggage handling system (1) according to one of claims 1 to 2, wherein the auxiliary handling system (14) is able to be integrated into an existing baggage handling position (3) with departure processing system (12) and user interface (13) such that computing and memory devices with data processing programs of the auxiliary handling system (14) are able to be disposed or executed remotely from the baggage handling position (3) and are able to be operated via a data network or via a cloud computing service from the user interface (13) of the baggage handling position (3).

## Revendications

1. Système d'enregistrement de bagages (1) pour un aéroport, comprenant
- une installation de triage (2) destinée au transport de bagages (B) vers des lieux de triage sur des itinéraires d'acheminement avec des aiguillages (6) réglables dans différentes directions d'acheminement, laquelle installation de triage présente un système de commande supérieur (9) et des unités de commande (7) associées aux aiguillages (6),
- un système d'enregistrement de décollage (12) destiné à l'annonce d'un bagage (B) pour un vol, qui est configuré pour enregistrer des attributs de bagages associés au bagage (B), présentant un code de compagnie aérienne, un numéro de vol, une classe de voyage et un itinéraire de voyage, et pour attribuer une donnée d'identification associée au bagage (B) et transmettre un élément de support (T) à relier au bagage (B),
- un système d'avis de bagages (11), qui est configuré pour former à partir de la donnée d'identification et des attributs de bagages associés un avis de bagage pour un bagage (B) à transporter et le transmettre au système de commande (9),
- dans lequel le système de commande (9) est configuré pour mettre à disposition une liste d'avis (AL) d'avis de bagages transmis et un plan de triage (SP) avec des associations de données d'identification et de lieux de triage et pour attribuer aux aiguillages (6) des tables d'itinéraires (RT) avec des associations de lieux de triage et de directions d'acheminement,
- et dans lequel chacune des unités de commande (7) est configurée pour faire interroger par le système, à l'aide d'une donnée d'identification d'un bagage (B) acquise en amont de l'aiguillage (6) le lieu de triage du bagage et pour régler à l'aide de la table d'itinéraires (RT) prédéfinie la direction d'acheminement associée au lieu de triage, **caractérisé**
- **par** un système d'enregistrement auxiliaire (14) qui est configuré pour prendre en charge par le système d'enregistrement de décollage (12) des attributs de bagages entrés lors de l'annonce d'un bagage (B) et la donnée d'identification attribuée et de là pour former l'avis de bagage et le transmettre au système de commande (9) ainsi que pour reproduire le plan de triage (SP) mis à disposition par le biais du système de commande (9),
- et en ce que chacune des unités de commande (7) est configurée pour interroger par le système d'enregistrement auxiliaire (14) à l'aide de la donnée d'identification d'un bagage (B) acquise en amont de l'aiguillage (6) le lieu de triage du bagage à titre subsidiaire.

2. Système d'enregistrement de bagages (1) selon la revendication 1,
- dans lequel le système d'enregistrement auxiliaire (14) est configuré pour enregistrer de manière subsidiaire les attributs de bagages associés au bagage (B), pour attribuer une donnée d'identification auxiliaire associée au bagage (B) et la transmettre à un élément de support auxiliaire (T) à relier au bagage (B), pour former à partir de la donnée d'identification auxiliaire et des attributs de bagages un avis de bagage auxiliaire et le transmettre au système de commande (9), et
- dans lequel le système de commande (9) est configuré pour enregistrer les avis de bagages auxiliaires transmis en vue d'un traitement dans la liste d'avis (AL) et pour mettre à disposition dans le plan de triage (SP) des associations de données d'identification auxiliaires et de lieux de triage.

3. Système d'enregistrement de bagages (1) selon l'une des revendications 1 à 2, dans lequel le système d'enregistrement auxiliaire (14) et le système d'enregistrement de décollage (12) peuvent être manipulés par le biais d'une interface utilisateur commune (13) au niveau d'un point d'enregistrement de bagages (3).

4. Système d'enregistrement de bagages (1) selon l'une des revendications 1 à 2, dans lequel le système d'enregistrement auxiliaire (14) peut être intégré dans un point d'enregistrement de bagages (3) existant avec un système d'enregistrement de décollage (12) et une interface utilisateur (13) de telle sorte que des dispositifs de calcul et de mise en mémoire sont disposés ou peuvent être exécutés avec des programmes informatiques du système d'enregistrement auxiliaire (14) à distance du point d'enregistrement de bagages (3) et peuvent être manipulés via un service d'informatique en nuage par l'interface utilisateur (13) du point d'enregistrement de bagages (3).
